# EUROPÄISCHE PATENTSCHRIFT

(11) **EP 1 728 034 B1**
(45) Veröffentlichungstag und Bekanntmachung des Hinweises auf die Patenterteilung: **31.08.2016**
(21) Anmeldenummer: 05716359.4
(22) Anmeldetag: 24.03.2005
(51) Int. Cl.: F25D 23/06

(54) **VERFAHREN ZUR BEFESTIGUNG VON ELEMENTEN AN DER INNENVERKLEIDUNG VON KÜHL- UND/ODER GEFRIERGERÄTEN UND VERFAHREN ZUR HERSTELLUNG EINER SOLCHEN BEFESTIGUNGSANORDNUNG**
METHOD FOR MOUNTING ELEMENTS ON THE INNER LINING OF A REFRIGERATOR AND/OR FREEZER AND METHOD OF PRODUCING SUCH MOUNTING ARRANGEMENT
PROCEDE POUR FIXER DES ELEMENTS SUR LE REVETEMENT INTERIEUR D'APPAREILS DE REFRIGERATION ET/OU DE CONGELATION ET PROCEDE DE FABRICATION D'UN TEL ARRANGEMENT DE FIXATION

(30) Priorität: 24.03.2004 DE 102004014464
(43) Veröffentlichungstag der Anmeldung: 06.12.2006
(73) Patentinhaber: Liebherr-Hausgeräte Ochsenhausen GmbH, 88411 Ochsenhausen (DE)
(72) Erfinder: KAUK, Franz, 88353 Kisslegg (DE); HECHT, Josef, 88416 Erlenmoos (DE)
(74) Vertreter: Laufhütte, Dieter
(86) Internationale Anmeldenummer: PCT/EP2005/003157
(87) Internationale Veröffentlichungsnummer: WO 2005/093348

(56) Entgegenhaltungen:
- EP-A- 0 582 785
- EP-A- 1 030 144
- JP-A- 59 229 164
- PATENT ABSTRACTS OF JAPAN Bd. 1996, Nr. 11, 29. November 1996 (1996-11-29) -& JP 08 178518 A (SANYO ELECTRIC CO LTD), 12. Juli 1996 (1996-07-12)
- PATENT ABSTRACTS OF JAPAN Bd. 2002, Nr. 05, 3. Mai 2002 (2002-05-03) -& JP 2002 022348 A (HOSHIZAKI ELECTRIC CO LTD), 23. Januar 2002 (2002-01-23)
- PATENT ABSTRACTS OF JAPAN Bd. 1998, Nr. 05, 30. April 1998 (1998-04-30) -& JP 10 019455 A (SANYO ELECTRIC CO LTD), 23. Januar 1998 (1998-01-23)
- PATENT ABSTRACTS OF JAPAN Bd. 1995, Nr. 02, 31. März 1995 (1995-03-31) -& JP 06 313669 A (HOSHIZAKI ELECTRIC CO LTD), 8. November 1994 (1994-11-08)
- PATENT ABSTRACTS OF JAPAN Bd. 010, Nr. 375 (M-545), 13. Dezember 1986 (1986-12-13) -& JP 61 167509 A (TOSHIBA CORP), 29. Juli 1986 (1986-07-29)
- PATENT ABSTRACTS OF JAPAN Bd. 015, Nr. 493 (M-1191), 13. Dezember 1991 (1991-12-13) -& JP 03 213982 A (MATSUSHITA REFRIG CO LTD), 19. September 1991 (1991-09-19)
- PATENT ABSTRACTS OF JAPAN Bd. 016, Nr. 376 (M-1294), 12. August 1992 (1992-08-12) -& JP 04 121570 A (TOSHIBA CORP), 22. April 1992 (1992-04-22)

## Beschreibung

Die Erfindung betrifft Verfahren zur Herstellung einer Befestigungsanordnung zur Befestigung von Elementen, insbesondere Auszugsschienen, an der Kunststoffinnenverkleidung einer Schaumstoff-wärmeisolierten Wand eines Kühl- und/oder Gefriergerätes und ein Befestigungsverfahren zur Befestigung von Elementen an der Innenverkleidung einer Schaumstoff-wärmeisolierten Wand eines Kühl- und/oder Gefriergerätes und ein Kühl- und/oder Gefriergerät mit Auszugsschienen, die mit Hilfe eines solchen Befestigungsverfahrens an der Innenverkleidung befestigt sind.

Speziell im Kühl- und/oder Gefriergerätebau werden dünnwandige Innenverkleidungen aus Kunststoff als Innenwandung und Außenwände eingesetzt, wobei der Zwischenraum zwischen Innenverkleidung und Außenwand mit Schaumstoff wärmeisoliert ist, der zwischen die Wände geschäumt wird. An die Innenwandung werden z. B. Schienen für Tragböden oder andere- Befestigungselemente angebracht. Bei der Befestigung von schwereren Elementen ergeben sich durch die dünnwandige Ausgestaltung der Innenverkleidung Stabilitätsprobleme, wenn z. B. ein entsprechendes Befestigungselement in die Innenverkleidung eingeschraubt wird.

Um solche Teile in der Kühlkammer zu befestigen, ist es bekannt, an der Rückseite der Innenwandung gesonderte Befestigungsplatten vorzusehen, die z. B. mit eingeschäumt werden können. Das zu befestigende Element wird dann mit Hilfe von Schrauben durch die Innenverkleidung hindurch an solchen Befestigungsplatten festgeschraubt. Bei der bekannten Lösung ist der Herstellungsaufwand daher sehr hoch. Außerdem muß die Innenverkleidung an einer oder mehreren Stellen durchbohrt werden, was die Qualität der Wärmeisolierung beeinträchtigt.

Dokument JP 08-178518 A offenbart ein Verfahren zur Herstellung einer Befestigungsanordnung zur Befestigung von Elementen an der Kunststoffinnenverkleidung einer Schaumstoff-wärmeisolierten Wand eines Kühlgeräts sowie eine entsprechende Befestigungsanordnung selbst. Das Verfahren aus JP 08-178518 A umfasst den Schritt der Fertigung der Innenverkleidung aus einem Kunststoffmaterial mit einer Aufnahmekontur, die derart ausgeformt ist, dass sie der Außenkontur des zu befestigenden Elementes an wenigstens drei Seiten zumindest teilweise entspricht, sodass das zu befestigende Element von der Aufnahmekontur aufgenommen werden kann. Ferner kann das zu befestigende Element in die genannte Aufnahmekontur aufgenommen werden, wobei an der Rückseite der Kunststoffinnenverkleidung bekannterweise eine Schaumstoffwärmeisolierung aufgeschäumt werden kann. Die gleiche Offenbarung ist auch dem Dokument JP 2002 022348 A und der JP 59 229 164 A entnehmbar.

Aufgabe der vorliegenden Erfindung ist es, Verfahren zur Herstellung einer Befestigungsanordnung, Befestigungsverfahren und ein Kühl- und/oder Gefriergerät anzugeben, mit deren Hilfe eine einfache und sichere Befestigung von Elementen an der Kunststoffinnenverkleidung einer Kühl- und/oder Gefriergerätewand ermöglicht wird. Diese Aufgabe wird mit einem Herstellungsverfahren mit den Merkmalen des Anspruches 1, einem Befestigungsverfahren mit den Merkmalen des Anspruches 5 bzw. einem Kühl- und/oder Gefriergerät mit den Merkmalen des Anspruches 8 gelöst. Die Unteransprüche sind auf vorteilhafte Ausgestaltungen gerichtet.

Bei dem erfindungsgemäßen Verfahren wird das zu befestigende Element in seiner Außenkontur zumindest teilweise in der Kunststoffinnenwandung des Kühl- und/oder Gefriergerätes nachgebildet. Auf diese Weise ist eine sichere Halterung des zu befestigenden Elementes gewährleistet. Auch ohne zusätzliche Verschraubungen oder Befestigungselemente ist das zu befestigende Element bereits in der Innenwandung gestützt und gehalten. Durch die Abformung der Außenkontur des zu befestigenden Elementes ist weiterhin eine aus optischen und platzökonomischen Gesichtspunkten vorteilhafte Gestaltung gewährleistet.

Besonders geeignet ist eine so hergestellte Befestigungsanordnung zur Befestigung von Auszugsschienen für Auszugsböden oder Auszugsschubladen, bei denen große Belastungen durch die Befestigung an der Innenwandung aufgenommen werden müssen.

Zur Herstellung einer bekannten Befestigungsanordnung wird die Innenverkleidung aus dünnwandigem Kunststoffmaterial mit einer Aufnahmekontur gefertigt, die derart ausgeformt ist, daß sie der Außenkontur des zu befestigenden Elementes an wenigstens drei Seiten zumindest teilweise entspricht, wodurch das zu befestigende Element von der Aufnahmekontur aufgenommen werden kann. Nach diesem Fertigungsprozeß wird das zu befestigende Element in die Aufnahmekontur eingelegt. Mit dem in die Aufnahmekontur eingelegten zu befestigenden Element wird die Innenverkleidung in an sich bekannter Weise dem Schäumprozeß zum Einbringen der Schaumstoffisolierung zwischen der Innenverkleidung und einer Außenwand des Kühl- und/oder Gefriergerätes unterzogen. Durch das Schäumen wird die an sich wenig stabile und flexible Innenverkleidung gestützt und gefestigt und bietet so sicheren Halt für das zu befestigende Element. Das eingelegte zu befestigende Element wird so umgriffen.

Bei einer erfindungsgemäßen Ausgestaltung des Verfahrens wird das zu befestigende Element bereits in das Fertigungswerkzeug eingelegt, so daß während des Fertigungsprozesses der Kunststoffinnenverkleidung die Außenkontur des zu befestigenden Elementes abgeformt wird. Wiederum durch den Schäumprozeß wird die Innenverkleidung gefestigt und gestützt, so daß das zu befestigende Element fixiert wird.

Die Innenverkleidung kann auf unterschiedliche Weise hergestellt werden. Zum Beispiel kann die Innenverkleidung dünnwandig spritzgegossen werden. Erfindungsgemäß wird die Innenverkleidung gezogen, insbesondere tiefgezogen. Im vorliegenden Text wird der Begriff "tiefziehen" synonym auch für andere Ziehprozesse verwendet.

Mit dem erfindungsgemäßen Verfahren ist die Herstellung von Befestigungsanordnungen möglich, die keine weiteren Zusatzteile zur Befestigung benötigen. Es ist eine innige Verbindung ohne Montagetoleranzen möglich, die auch zur Aufnahme hoher Lagerkräfte und damit Nutzung großer Auflageflächen geeignet ist. Durch die zumindest teilweise Aufnahme des zu befestigenden Elementes in der Aufnahmekontur der Innenverkleidung ergibt sich in dem Kühlraum ein nutzbarer Platzvorteil und eine optisch ansprechende Erscheinung. Dies gilt insbesondere, wenn die Aufnahmekontur derart tief ist, daß das zu befestigende Element darin vollständig aufgenommen werden kann und damit im wesentlichen flächenbündig in der Innenwandung zu liegen kommt. Bei einer solchen Ausgestaltung ergeben sich auch Vorteile beim Reinigen des Gerätes.

In der Aufnahmekontur kann das zu befestigende Element z. B. eingeklebt werden. Bei einer anderen Ausgestaltung des Verfahrens werden in die Aufnahmekontur während der Fertigung der Innenverkleidung ein oder mehrere Rastnäpfe gebildet, die entsprechend ausgestaltete Rastnasen an dem zu befestigenden Element aufnehmen können und so dazu dienen, das zu befestigende Element in der Aufnahmekontur zu halten. Eine solche Ausgestaltung ermöglicht z. B. im Servicefall ein leichtes Entfernen des zu befestigenden Elementes. Derartige Rastnäpfe können auch von Vorteil sein, wenn ein zu befestigendes Element nachträglich z. B. im Servicefall ersetzt werden muß.

Bei einer besonders vorteilhaften Ausgestaltung des erfindungsgemäßen Verfahrens wird jedoch die Aufnahmekontur in der Innenverkleidung derart ausgestaltet, daß sie einen Hinterschnitt aufweist, der das zu befestigende Element zumindest teilweise umgreift. Dazu kann das zu befestigende Element z. B. in das bereits gefertigte Kunststoffmaterial der Innenverkleidung vor dem Schäumprozeß in die hinterschnittene Aufnahmekontur eingeklipst werden. Vor dem Schäumprozeß ist das dünnwandige Kunststoffinnenwandmaterial flexibel und wenig stabil, so daß dieser Einklipsprozeß leicht durchgeführt werden kann. Nach dem Einklipsen wird der Schäumprozeß vorgenommen, der die Innenwandung von innen stützt und festigt, so daß ein formschlüssiges, festes Umgreifen des zu befestigenden Elementes gewährleistet ist. Durch den Schaumdruck und die Aushärtung entsteht eine innige Verbindung.

Ebenso kann das zu befestigende Element in das Fertigungswerkzeug eingelegt werden, mit dessen Hilfe die Innenwandung gefertigt wird, wobei der das zu befestigende Element umgreifende Hinterschnitt gebildet werden kann. Bei einer solchen Ausgestaltung des erfindungsgemäßen Verfahrens entsteht also beim Herstellvorgang der Innenverkleidung eine formschlüssige Halterung des zu befestigenden Elementes, die durch den Schäumprozeß verstärkt und gefestigt wird.

Unabhängiger Schutz wird auch für entsprechende Befestigungsverfahren mit Hilfe einer hinterschnittenen Aufnahmekontur beansprucht. Die Vorteile derartiger erfindungsgemäßer Befestigungsverfahren ergeben sich aus der obigen Schilderung der entsprechenden erfindungsgemäßen Herstellungsverfahren.

Bei allen Ausführungsformen, bei denen hinterschnittene Aufnahmekonturen zum Einsatz kommen, kann auch im Servicefall leicht eine Auswechslung der durch den Hinterschnitt in der gefestigten geschäumten Innenwand gehaltenen befestigten Elemente vorgenommen werden. Die zu befestigenden Elemente, z. B. Auszugsschienen, können mit Kraft aus der hinterschnittenen Nut herausgezogen bzw. eingepresst werden. Dies ist aufgrund der Schaumelastizität und der Dünnwandigkeit der Innenverkleidung mit entsprechendem Kraftaufwand problemlos durchführbar.

Eine Befestigungsanordnung zur Befestigung von Elementen an der Innenverkleidung einer Schaumstoff-wärmeisolierten Wand eines Kühl- und/oder Gefriergerätes weist eine Aufnahmekontur in der Innenverkleidung des Kühl- und/oder Gefriergerätes auf, die derart zumindest teilweise der Außenkontur des zu befestigenden Elementes entspricht, daß sie das zu befestigende Element formschlüssig oder reibschlüssig aufnehmen kann. Die Vorteile einer solchen Befestigungsanordnung und ihrer besonderen Ausgestaltungen -wurden bereits mit Bezug zu den erfindungsgemäßen Herstellungsverfahren für die Befestigungsanordnung geschildert.

Besonders vorteilhaft lässt sich das erfindungsgemäße Herstellungsverfahren einsetzen, um eine Befestigungsanordnung für Auszugsschienen in Kühl- und/oder Gefriergeräten zu schaffen. Die langgestreckte Ausgestaltung von Auszugsschienen eignet sich besonders für den form- bzw. reibschlüssigen Kontakt in der Aufnahmekontur der Innenverkleidung. Durch den reib- bzw. formschlüssigen Kontakt der langgestreckten Auszugsschiene ist eine sichere Halterung trotz der bei Auszugsschienen oftmals großen Lagerkräfte gewährleistet. Solche Auszugsschienen können z. B. zum Ausziehen von entsprechenden Lagerböden oder Auszugsschubladen dienen.

Eine Befestigungsanordnung für Auszugsschienen kann zusätzlich einen Auszugsstop umfassen, der derart ausgestaltet ist, daß er einer Verschiebung des festen Teiles der Auszugsschiene in Auszugsrichtung entgegensteht. Auf diese Weise ist sichergestellt, daß während des normalen Betriebes der Auszugsschiene der feste Teil fixiert bleibt und nicht in der Aufnahmekontur hin und her rutschen kann.

Ein solcher Auszugsstop kann z. B. durch entsprechend angeordnete vorstehende Bereiche in der Aufnahmekontur gebildet sein, die in entsprechend ausgestaltete Öffnungen im festen Teil der Auszugsschiene eingreifen. Bei einer anderen Ausführungsform wird der feste Teil der Auszugsschiene auch an seinen Enden von der Innenverkleidung umfaßt, so daß ein seitliches Verrutschen unmöglich ist. Solche Auszugsstopelemente können beim Fertigen der Innenverkleidung mit geformt werden.

Im folgenden wird die Erfindung anhand der beiliegenden schematischen Figuren im Detail erläutert. Dabei zeigt:
- Figur 1:: einen Querschnitt durch eine Befestigungsanordnung und
- Figur 2:: einen Querschnitt durch eine andere Ausführungsform einer Befestigungsanordnung.

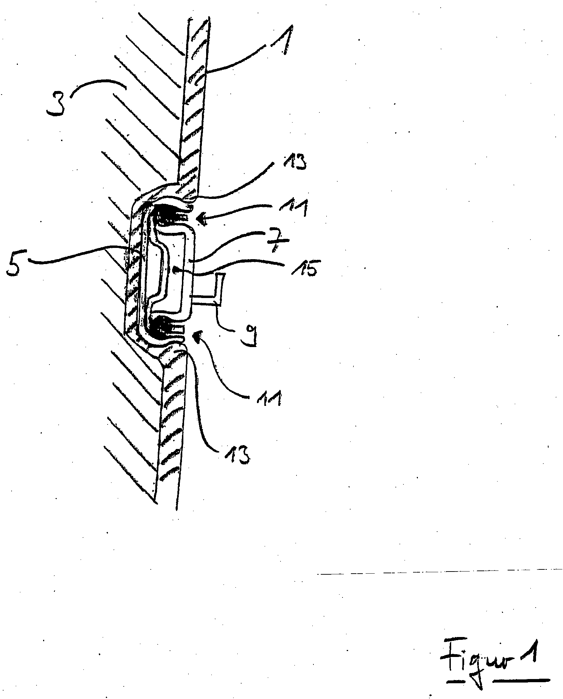

Figur 1 zeigt den Querschnitt durch eine Befestigungsanordnung in der Innenverkleidung bzw. der Innenwandung 1 z. B. eines Kühl- und/oder Gefrierschrankes. An der Außenseite der Innenwandung 1 befindet sich in an sich bekannter Weise die geschäumte Wärmeisolierung 3. In der Aufnahmekontur 15, die in der Kunststoffinnenwandung 1 gebildet ist, liegt formschlüssig der feste Teil der Auszugsschiene 5, die hier im Querschnitt zu erkennen ist. In der Auszugsschiene 5, die durch den Formschluß z. B. mit den Wülsten 13 festgehalten ist, läuft über an sich bekannte Lagerungen, z. B. Kugel- oder andere Wälzlager 11 eine bewegliche Auszugsschiene 7 mit einer Auflagevorrichtung 9 für einen Auszugsboden oder eine Ausziehschublade.

Die Auszugsschiene 5 ist im wesentlichen flächenbündig, so daß eine Reinigung der Innenwandung 1 leicht möglich ist. Dadurch, daß die Auszugsschiene 5 in der Innenwandung 1 aufgenommen ist, ist der im Kühlraum vorhandene Platz vergrößert und optisch ansprechender als wenn die Auszugsschiene an einer planen Innenwandung befestigt wäre.

Zur Herstellung der Befestigungsanordnung der Figur 1 wird die Kunststoffinnenwandung 1 in einem Tiefziehprozeß derart geformt, daß sie die in Figur 1 erkennbare Querschnittsform aufweist. Im Anschluß wird die vorgefertigte Auszugsschiene 5 in die flexible und wenig stabile Innenwandung 1 von der in Figur 1 .rechten Seite her durch die Verengungen 13 hindurch eingeklipst. Im Anschluß wird die Innenwandung in dem weiteren Produktionsprozeß des Kühl- und/oder Gefriergerätes in an sich bekannter Weise weiter verarbeitet. Insbesondere wird durch eine in Figur 1 nicht gezeigte Außenwandung und die Innenwandung 1 ein Hohlraum geschaffen, der mit Schaum 3 zur Wärmeisolierung gefüllt wird. Durch diesen Schäumprozeß wird die Aufnahmekontur 15 in der Innenwandung 1 von außen gestützt und gefestigt, so daß die Auszugsschiene 5 fest gehalten wird.

In einem erfindungsgemäßen Produktionsprozeß wird die Auszugsschiene 5 auf die noch nicht tiefgezogene Innenwandverkleidung 1 aufgelegt und während des Tiefziehprozesses als Form für die Aufnahmekontur 15 verwendet. Bei einem solchen Verfahren ist die Auszugsschiene nach dem Tiefziehprozeß bereits in der Innenwandverkleidung 1 gehalten und wird dann in beschriebener Weise durch den Schäumprozeß für den Schaum 3 von der Rückseite der Innenwandung 1 gefestigt und stabilisiert.

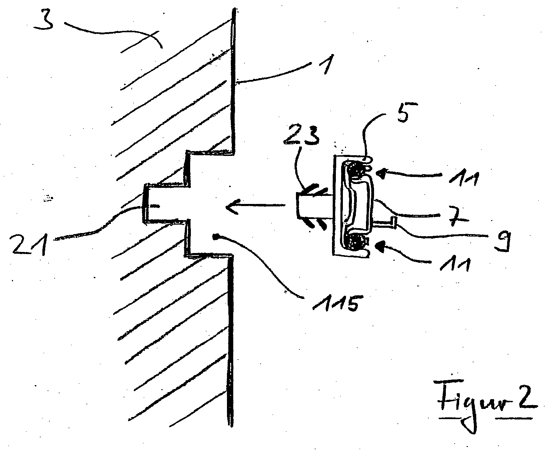

Die Ausführungsform der Figur 2 zeigt einen Querschnitt durch eine anders gestaltete Aufnahmekontur 115, in der entlang der Richtung senkrecht zur Figurenebene eine Anzahl von Rastnäpfen 21 gebildet ist. Eine mit entsprechenden Rastnasen 23 ausgestattete Auszugsschiene 5 kann in Pfeilrichtung in die Aufnahmekontur 115 eingeschoben und durch die Verbindung von Rastnasen 23 und Rastnäpfen 21 fest gehalten werden. Eine solche Ausgestaltung ermöglicht insbesondere ein leichtes Auswechseln der Auszugsschiene 5 z. B. im Servicefall.

Alternativ kann bei einer solchen Ausführungsform vorgesehen sein, daß sich eine Rastnase 23 entlang der Auszugsschiene 5 erstreckt und der Rastnapf 21 sich wie eine Nut senkrecht zur Figurenebene erstreckt.

Selbstverständlich können die Ausführungsformen der Figuren 1 und 2 auch miteinander kombiniert werden, so daß eine Befestigungsanordnung durch formschlüssige Halterung einer von der Innenwandverkleidung 1 umgriffenen Auszugsschiene 5 mit einer zusätzlichen Befestigung durch Rastnasen 23 in Rastnäpfen 21 vorgesehen ist.

## Patentansprüche

1. Verfahren zur Herstellung einer Befestigungsanordnung zur Befestigung von Elementen (5), insbesondere Auszugsschienen, an der Kunststoffinnenverkleidung (1) einer Schaumstoff-wärmeisolierten Wand eines Kühl- und/oder Gefriergerätes, **dadurch gekennzeichnet, dass** es folgende Schritte umfaßt:
a) Einlegen des zu befestigenden Elementes (5) in ein Tiefziehwerkzeug zum Tiefziehen der Kunststoffinnenverkleidung (1) aus Kunststoffmaterial, dann
b) Fertigen der Innenverkleidung (1) unter zumindest teilweiser Abformung des zu befestigenden Elementes (5) zur Bildung einer Aufnahmekontur (15, 115) in der Kunststoffinnenverkleidung (1) für das zu befestigende Element (5), und dann
c) Schäumen einer Schaumstoffwärmeisolierung (3) auf der Rückseite der Kunststoffinnenverkleidung (1).

2. Verfahren nach Anspruch 1, bei dem die Aufnahmekontur (15) derart mit einem Hinterschnitt gefertigt wird, daß sie das zu befestigende Element (5) zumindest teilweise umgreifen und so fixieren kann.

3. Verfahren nach einem der Ansprüche 1 oder 2, bei dem in der Rückseite der Aufnahmekontur (15, 115) ein oder mehrere Rastnäpfe (21) gebildet werden, vorzugsweise während des Fertigungsschrittes der Innenverkleidung.

4. Verfahren zur Herstellung einer Befestigungsvorrichtung nach einem der Ansprüche 1 bis 3, bei dem während des Fertigungsschrittes der Innenverkleidung die Aufnahmekontur (15, 115) mit einer Tiefe ausgebildet wird, die der Tiefe des zu befestigenden Elementes (5) entspricht.

5. Verfahren zur Befestigung von Elementen (5), insbesondere Auszugsschienen, an der Kunststoffinnenverkleidung (1) einer Schaumstoff-wärmeisolierten Wand eines Kühl- und/oder Gefriergerätes, **dadurch gekennzeichnet, dass** es folgende Schritte umfaßt:
a) Einlegen des zu befestigenden Elementes (5) in ein Fertigungswerkzeug zum Fertigen der Kunststoffinnenverkleidung (1) aus Kunststoffmaterial,
b) Fertigen der Innenverkleidung (1) unter zumindest teilweiser Abformung des zu befestigenden Elementes (5) zur Bildung einer Aufnahmekontur (15) in der Kunststoffinnenverkleidung (1), die derart mit einem Hinterschnitt ausgeformt ist, daß sie das zu befestigende Element (5) zumindest teilweise umgreift, und
c) Schäumen einer Schaumstoffwärmeisolierung (3) auf der Rückseite der Kunststoffinnenverkleidung.

6. Verfahren nach einem der Ansprüche 1 bis 5, bei dem der Fertigungsschritt der Innenverkleidung einen Ziehprozess, vorzugsweise einen Tiefziehprozess umfasst.

7. Verfahren nach einem der Ansprüche 1 bis 5, bei dem der Fertigungsprozess der Innenverkleidung einen Spritzgießprozess umfasst.

8. Kühl- und/oder Gefriergerät mit zumindest einem Ausziehboden bzw. einer Ausziehschublade, der bzw. die auf Auszugsschienen (5) herausziehbar gelagert ist, wobei die Auszugsschienen (5) an der Innenverkleidung (1) des Kühl- und/oder Gefriergerätes mit einem Verfahren nach Anspruch 5 befestigt sind.

## Claims

1. A method of producing a mounting arrangement for mounting elements (5), in particular pull-out rails, on the plastic inner lining (1) of a thermally foam-insulated wall of a refrigerator and/or freezer, **characterized in that** it comprises the following steps:
a) inserting the element (5) to be mounted into a deep-drawing tool for deep-drawing the plastic inner lining (1) from plastic material, then
b) fabricating the inner lining (1) by at least partly molding the element (5) to be mounted for forming a receiving contour (15, 115) in the plastic inner lining (1) for the element (5) to be mounted, and then
c) foaming a thermal foam insulation (3) on the back of the plastic inner lining (1).

2. The method according to claim 1, in which the receiving contour (15) is fabricated with an undercut such that it can at least partly enclose and thus fix the element (5) to be mounted.

3. The method according to any of claims 1 or 2, in which one or more snap-in cups (21) are formed in the back of the receiving contour (15, 115), preferably during the step of manufacturing the inner lining.

4. A method of producing a mounting device according to any of claims 1 to 3, in which during the step of manufacturing the inner lining the receiving contour (15, 115) is formed with a depth which corresponds to the depth of the element (5) to be mounted.

5. A method of mounting elements (5), in particular pull-out rails, on the plastic inner lining (1) of a thermally foam-insulated wall of a refrigerator and/or freezer, **characterized in that** it comprises the following steps:
a) inserting the element (5) to be mounted into a fabrication tool for fabricating the plastic inner lining (1) from plastic material,
b) fabricating the inner lining (1) by at least partly molding the element (5) to be mounted for forming a receiving contour (15) in the plastic inner lining (1), which is molded with an undercut such that it at least partly encloses the element (5) to be mounted, and
c) foaming a thermal foam insulation (3) on the back of the plastic inner lining.

6. The method according to any of claims 1 to 5, in which the step of manufacturing the inner lining comprises a drawing process, preferably a deep-drawing process.

7. The method according to any of claims 1 to 5, in which the process of manufacturing the inner lining comprises an injection molding process.

8. A refrigerator and/or freezer comprising at least one pull-out tray or pull-out drawer, which tray or drawer is mounted on pull-out rails (5) so that it can be pulled out, wherein the pull-out rails (5) are mounted on the inner lining (1) of the refrigerator and/or freezer by means of a method according to claim 5.

## Revendications

1. Procédé de fabrication d'un dispositif de fixation pour la fixation d'éléments (5), en particulier de rails coulissants, sur le revêtement intérieur en matière plastique (1) d'une paroi thermiquement isolée par de la mousse d'un appareil de réfrigération et/ou de congélation, **caractérisé en ce qu'**il comprend les étapes suivantes :
a) Insertion de l'élément (5) à fixer dans un outil d'emboutissage pour emboutir le revêtement intérieur en matière plastique (1), ensuite
b) réalisation du revêtement intérieur (1) par moulage au moins partiel de l'élément (5) à fixer pour former un contour de réception (15, 115) dans le revêtement intérieur en matière plastique (1) pour l'élément (5) à fixer, et ensuite
c) moussage d'un isolement thermique en mousse (3) sur la face postérieure du revêtement intérieur en matière plastique (1).

2. Procédé selon la revendication 1, dans lequel le contour de réception (15) est réalisé avec une contre-dépouille de telle sorte qu'il peut au moins partiellement enserrer et ainsi fixer l'élément (5) à fixer.

3. Procédé selon l'une des revendications 1 ou 2, dans lequel un ou plusieurs godets d'enclenchement (21) sont réalisés dans la face postérieure du contour de réception (15, 115) de préférence pendant l'étape de fabrication du revêtement intérieur.

4. Procédé de fabrication d'un dispositif de fixation selon l'une des revendications 1 à 3, dans lequel pendant l'étape de fabrication du revêtement intérieur, le contour de réception (15, 115) est réalisé avec une profondeur qui correspond à la profondeur de l'élément (5) à fixer.

5. Procédé de fixation d'éléments (5), en particulier de rails coulissants, sur le revêtement en matière plastique (1) d'une paroi thermiquement isolée par de la mousse d'un appareil de réfrigération et/ou de congélation, **caractérisé en ce qu'**il comprend les étapes suivantes :
a) insertion de l'élément (5) à fixer dans un outil de fabrication pour fabriquer le revêtement intérieur en matière plastique (1),
b) réalisation du revêtement intérieur (1) par moulage au moins partiel de l'élément (5) à fixer pour former un contour de réception (15) dans le revêtement intérieur en matière plastique (1) qui est moulé avec une contre-dépouille de telle sorte qu'il enserre au moins partiellement l'élément (5) à fixer, et
c) moussage d'un isolement thermique en mousse (3) sur la face postérieure du revêtement intérieur en matière plastique.

6. Procédé selon l'une des revendications 1 à 5, dans lequel l'étape de fabrication du revêtement intérieur comprend un processus d'étirage, de préférence un processus d'emboutissage.

7. Procédé selon l'une des revendications 1 à 5, dans lequel le processus de fabrication du revêtement intérieur comprend un processus de moulage par injection.

8. Appareil de réfrigération et/ou de congélation comportant au moins un plateau coulissant ou un tiroir coulissant qui est monté amovible sur des rails coulissants (5), les rails coulissants (5) étant fixés sur le revêtement intérieur (1) de l'appareil de réfrigération et/ou de congélation par un procédé selon la revendication 5.
